# EUROPÄISCHE PATENTSCHRIFT

(11) **EP 1 055 830 B1**
(45) Veröffentlichungstag und Bekanntmachung des Hinweises auf die Patenterteilung: **31.08.2005**
(21) Anmeldenummer: 00105204.2
(22) Anmeldetag: 13.03.2000
(51) Int. Cl.: F16C 3/00

(54) **Gelenkwelle**
Articulated shaft
Arbre articulé

(30) Priorität: 27.05.1999 DE 29909271 U
(43) Veröffentlichungstag der Anmeldung: 29.11.2000
(73) Patentinhaber: Voith Paper Patent GmbH, 89522 Heidenheim (DE)
(72) Erfinder: Beisiegel, Diethelm, 89547 Gerstetten (DE)

(56) Entgegenhaltungen:
- DE-B- 1 185 018
- US-A- 3 299 670
- US-A- 4 003 219
- US-A- 4 344 305

## Beschreibung

Die Erfindung betrifft eine Gelenkwelle, insbesondere für den Einsatz in einer Papier- oder Kartonmaschine, mit zwei Kreuzgelenken, wobei jedes Kreuzgelenk zu seiner Anschlußseite hin ein Wellenteil, Antriebswelle bzw. Abtriebswelle, aufweist, mit einer zwischen den Kreuzgelenken liegenden, einen Teleskop-Längenausgleich aufweisenden Zwischenwelle, die aus zwei Zwischenwellen-Teilen zusammengesetzt ist, und mit einer an der Abtriebswelle angebrachten Schnellösekupplung, insbesondere selbstzentrierende Schnellösekupplung, zwecks schnellem An- und Abkoppeln an eine bzw. von einer Walze, siehe DE-A-1 185 018.

In Papier- oder Kartonmaschinen kommen eine Vielzahl von verschiedenen Walzen, beispielsweise Papier- und Filzleitwalzen, Breitstreckwalzen, Saugwalzen, Durchbiegungseinstellwalzen, Trockenzylinder, Glättzylinder und Anpreßtrommeln, zum Einsatz. Viele der genannten Walzen müssen durch geeignete Antriebsvorrichtungen angetrieben werden.

Zum allgemeinen Stand der Technik hinsichtlich dieser Antriebsvorrichtungen für Walzen gehören die Antriebe der Walzen über Gelenkwellen mit Normmotoren der Bauform B3. Die im Regelfall verwendeten Gelenkwellen sind in der DIN 808 umfassend hinsichtlich folgender Eigenschaften genormt: Anwendungsbereich und Zweck, Maße und Bezeichnung, Werkstoff, Lagerausführung, Beanspruchbarkeit und Hinweise für den Einbau. Die genormten Gelenkwellen können generell entweder nur mit einem Kreuzgelenk (Einfach-Gelenkwelle) oder mit zwei Kreuzgelenken ausgeführt sein. Im zuletzt genannten Fall können die Gelenkwellen in Z- oder W-Anordnung ausgeführt sein. Ein Synchronlauf ihrer An- und Abtriebswellen ist gegeben, wenn die Wellenteile der Gelenkwellen in einer Ebene liegen, wenn beide Gabeln der Zwischenwellen in einer Ebene liegen, oder wenn die Beugewinkel β₁ und β₂ der beiden Gelenke der Gelenkwellen gleich sind.

Ferner ist bekannt, daß viele der oben genannten Walzen bei einem Walzenwechsel von der Gelenkwelle gelöst und wieder angekoppelt werden müssen. Dieses Lösen und Ankoppeln der Gelenkwelle von den zu wechselnden Walzen kann entweder im herkömmlichen Handbetrieb oder mittels einer hydraulischen Längsverschiebung des Verschiebeteils (Zwischenwelle mit Teleskop-Längenausgleich) der Gelenkwelle erfolgen. Die hydraulische Längsverschiebung zählt schon seit mehreren Jahren zum allgemein bekannten Stand der Technik und ist beispielsweise in der Publikation "Voith Transmit®: Hochleistungsgelenkwellen - Ein Programm für die Praxis", Seite 34, Ausgabe 1/96, der Firma Voith Turbo GmbH ausführlich offenbart. Prinzipiell ist bei der hydraulischen Längsverschiebung die Gelenkwelle im Verschiebeteil als Gleichlaufzylinder ausgebildet, wobei die hydraulischen Anschlüsse und die Betätigung leicht zugänglich am Außenmantel der Gelenkwelle angebracht sind und wobei als Kraftquelle handels-übliche Hydraulikaggregate dienen.

Nachteilig an diesen bekannten Verfahren und Vorrichtungen zum Walzenwechsel mit einer Gelenkwelle ist es, daß sie zum einen sehr beschwerlich durchzuführen und damit zeitraubend (Produktionsausfälle, Runnability-Einbußen und dergleichen) sind und zum anderen sowohl in der Anschaffung (Anschaffungskosten) als auch im Unterhalt (Betriebs- und Wartungskosten) überdurchschnittlich teuer.

Der Erfindung liegt daher die Aufgabe zugrunde, eine Gelenkwelle der eingangs erwähnten Art so zu verbessern, daß die genannten Nachteile des Standes der Technik nicht auftreten und daß der Walzenwechsel mit einer Gelenkwelle leichter und rascher erfolgen kann.

Zur Lösung dieser Aufgabe wird eine Gelenkwelle vorgeschlagen, die die in Schutzanspruch 1 genannten Merkmale aufweist.

Erfindungsgemäß wird die Aufgabe der Erfindung dadurch gelöst, daß jedes der über den Teleskop-Längenausgleich miteinander verbundenen Zwischenwellen-Teile der Zwischenwelle mit mindestens einem Koppelelement versehen ist und daß im Stillstand der Gelenkwelle die mindestens zwei Koppelelemente mittels mindestens eines Hubelements aneinander koppelbar sind. Durch diese Ausgestaltung wird erreicht, daß im Stillstand der Gelenkwelle eine kostengünstige Kraftquelle leicht und rasch an mindestens zwei kostengünstige Elemente der Gelenkwelle anbringbar ist und der Walzenwechsel zeitminimiert und sicher vollzogen werden kann.

In weiterer Ausgestaltung der Erfindung ist das Koppelelement ein Ausbauring. Diese Form des Koppelelements bringt sowohl den wirtschaftlichen Vorteil, daß es leicht und damit kostengünstig herstellbar ist, als auch den kinematischen Vorteil, daß aufgrund der vorliegenden Symmetrie ein Auswuchten nicht mehr erforderlich ist, mit sich. Jedoch sind auch andere Formen für das Koppelelement denkbar, beispielsweise am Umfang der Zwischenwellen-Teile angeordnete Augen, Einzelstege und dergleichen.

Als vorteilhaft hat es sich erwiesen, wenn der Ausbauring, in Längsrichtung der Zwischenwelle gesehen, eine Dicke von 8 bis 20 mm aufweist. Der sich hierin ergebende Vorteil liegt darin, daß mit diesem Dickenbereich den festigkeitstechnischen Anforderungen genüge getan wird und zudem noch keine kinematischen und konstruktiven Nachteile in Kauf genommen werden müssen.

In weiterer Ausgestaltung der Erfindung weist der Ausbauring einen Durchmesser im Bereich von 125 % bis 160 %, vorzugsweise von 135 % bis 150 %, des Außendurchmessers der Zwischenwelle auf. Vorteilhaft ist, daß diese Durchmesserbereiche sowohl noch im Bereich der konstruktiven Akzeptanz liegen als auch den festigkeitstechnischen Anforderungen noch genüge tun.

Gemäß einer weiteren Ausgestaltung der Erfindung weist der Ausbauring, in Längsrichtung der Zwischenwelle gesehen, eine kreisrunde Außenkontur auf. Diese Form der Außenkontur bringt den Vorteil mit sich, daß der Ausbauring eine rotationssymmetrische Form besitzt und somit sich somit als Drehteil kostengünstig herstellen läßt.

Bei einer bevorzugten Ausführungsform der Erfindung ist die komplette Gelenkwelle von einer Gelenkwellenschutzeinrichtung umgeben, die an ihrer Längsseite sowohl in dem Bereich zwischen den Ausbauringen mindestens eine Wechselöffnung als auch in den Bereichen der beiden Kreuzgelenke mindestens je eine Schmieröffnung aufweist. Durch die Verwendung einer Gelenkwellenschutzeinrichtung wird den sicherheitsrechtlichen Vorschriften (Arbeitssicherheit, Betriebssicherheit und dergleichen) Rechnung getragen. Durch die Anbringung der Öffnungen ergibt sich der Vorteil, daß die Gelenkwellenschutzeinrichtung sowohl beim Walzenwechsel als auch beim Schmieren der Kreuzgelenke nicht entfernt werden muß, was letztlich wiederum zu einem Zeit- und Kostenvorteil führt.

Bei einer bevorzugten Ausführung der Erfindung weist der Ausbauring, in Längsrichtung der Zwischenwelle gesehen, eine größtenteils kreisrunde Außenkontur auf, die mit mindestens einer am Rand der Außenkontur angebrachten Aussparung in Form eines Ellipsoids versehen ist. Dadurch ergeben sich die Vorteile, daß die Grundform der Außenkontur eine rotationssymmetrische Form besitzt und sich somit als Drehteil kostengünstig herstellen läßt und daß durch die Aussparung in Form eines Ellipsoids das Kreuzgelenk ohne größeren Aufwand an Zeit und Umbauten in Längsrichtung der Zwischenwelle geschmiert werden kann.

In weiteren Ausgestaltungen der Erfindung weist das Ellipsoid eine Breite von 10 bis 50 mm, vorzugsweise von 20 bis 35 mm, und/oder einen Krümmungsradius von 100 bis 200 mm, vorzugsweise von 125 bis 175 mm, auf. Die angegebenen Bereiche stellen vorteilhafte Größen dar, die sich mittels genormter Bearbeitungswerkzeuge kostengünstig herstellen lassen.

Als ganz besonderes vorteilhaft hat es sich erwiesen, wenn die komplette Gelenkwelle von einer Gelenkwellenschutzeinrichtung umgeben ist, die an ihrer Längsseite in dem Bereich zwischen den Ausbauringen mindestens eine Wechselöffnung aufweist. Wie bereits vorstehend ausgeführt, wird durch die Verwendung einer Gelenkwellenschutzeinrichtung den sicherheitsrechtlichen Vorschriften (Arbeitssicherheit, Betriebssicherheit und dergleichen) Rechnung getragen. Durch die Anbringung der Wechselöffnung ergibt sich wiederum der Vorteil, daß die Gelenkwellenschutzeinrichtung beim Walzenwechsel nicht entfernt werden muß, was letztlich wiederum zu einem Zeit- und Kostenvorteil führt.

Ein erfindungsgemäßer Vorteil ergibt sich auch, wenn die Gelenkwellenschutzeinrichtung im Bereich zur Walze hin mit einem Anschlußstück versehen ist, das mit einem Bajonettverschluß zur Schnellankoppelung und -abkoppelung mit einer bzw. von einer Schutzeinrichtung der Walze versehen ist. Das Anschlußstück erfüllt in vollem Maße die bereits erwähnten sicherheitsrechtlichen Vorschriften, wohingegen die Bajonettverschluß die Möglichkeit eines schnellen Walzenwechsels ohne Lösen von Verbindungsteilen, beispielsweise Schrauben oder dergleichen, positiv unterstützt.

In weiterer Ausgestaltung ist das Anschlußstück, in Längsrichtung der Zwischenwelle gesehen, zweiteilig ausgeführt. Dadurch eröffnet sich die Möglichkeit, das Anschlußstück ohne Abkoppeln der Gelenkwelle von der Walze schnell und sicher entfernen und gegebenenfalls austauschen zu können.

Weiterhin hat es sich als vorteilhaft erwiesen, wenn die Abtriebswelle während des Walzenwechsels durch eine Abstützvorrichtung entgegen der wirkenden Schwerkraft abgestützt ist. Diese Abstützvorrichtung kann aber auch als von oben wirkender Seil- oder Hebezug ausgebildet sein. Es ergibt sich dabei der Vorteil, daß die Antriebswelle nach Einsetzen der neuen Walze ohne Höhenverschiebung wieder an die neuen Walze angekoppelt werden kann.

Bevorzugterweise ist die Hubelement ein doppeltwirkender Hydraulikzylinder. Ein doppeltwirkender Hydraulikzylinder bringt den Vorteil mit sich, daß er eine kostengünstige Kraftquelle sowohl in der Anschaffung als auch im Betrieb darstellt, eine hohe Betriebssicherheit mit sich bringt und zudem noch leicht im Handling ist. Ferner läßt sich durch ihn eine für die Montage als auch für die Demontage erforderliche Bewegung in einem Bauteil realisieren.

Es hat sich ferner als ausreichend erwiesen, wenn der Teleskop-Längenausgleich eine Ausgleichsstrecke von 50 bis 250 mm, vorzugsweise von 100 bis 200 mm, besitzt. Diese Streckenbereiche (Standard-Zwischenwelle) genügen vollauf den Anforderungen der Praxis und gestatten zudem noch eine sichere und zuverlässige Konstruktion der Zwischenwelle.

Es versteht sich, daß die vorstehend genannten und nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus den Unteransprüchen und der nachfolgenden Beschreibung bevorzugter Ausführungsbeispiele unter Bezugnahme auf die Figuren.

Die Erfindung soll nachfolgend anhand der Zeichnungen näher erläutert werden. Es stellen dar:
- Figur 1:: eine Seitenansicht einer Gelenkwelle mit einem doppelten Kreuzgelenk nach DIN 808;
- Figur 2:: eine Seitenansicht einer Gelenkwelle mit einer erfindungsgemäßen Ausbauvorrichtung;
- Figur 3:: eine Frontansicht eines erfindungsgemäßen Ausbaurings mit kreisrunder Außenkontur;
- Figur 4:: eine Frontansicht eines erfindungsgemäßen Ausbaurings mit größtenteils kreisrunder Außenkontur und vier symmetrisch verteilten Aussparungen in Form eines Ellipsoids;
- Figur 5:: eine Seitenansicht einer Gelenkwelle mit einer Gelenkwellenschutzeinrichtung;
- Figur 6:: eine Seitenansicht eines Anschlußstücks einer Gelenkwellenschutzeinrichtung; und
- Figur 7:: eine Vorderansicht eines Bajonettverschlusses eines Anschlußstücks einer Gelenkwellenschutzeinrichtung.

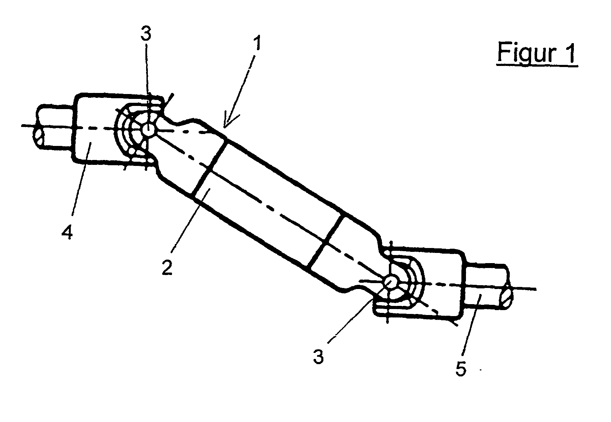

Die Figur 1 dargestellte Gelenkwelle mit doppeltem Kreuzgelenk 1 besteht aus einer Zwischenwelle 2, die an ihren beiden Enden mit je einem Kreuzgelenk 3 versehen ist. An einem Kreuzgelenk 3 ist die Antriebswelle 4, am anderen Kreuzgelenk 3 ist die Abtriebswelle 5 formschlüssig angebracht. Da eine derartige Gelenkwelle seit Jahren zum allgemein bekannten Stand der Technik zählt und überdies in der DIN 808 genormt ist, wird von einer weiteren Beschreibung derselben an dieser Stelle abgesehen. Der Inhalt der genannten DIN 808 wird hiermit zum Gegenstand dieser Beschreibung gemacht.

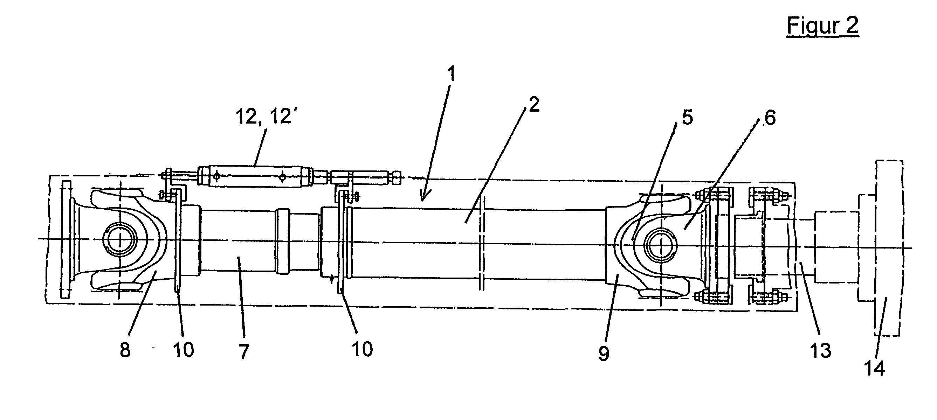

Die Figur 2 zeigt eine Seitenansicht einer Gelenkwelle mit doppeltem Kreuzgelenk 1. Die dargestellte Gelenkwelle mit doppeltem Kreuzgelenk 1 besteht sowohl aus den bereits in Figur 1 beschriebenen Teile als auch aus einer an der Abtriebswelle 5 angebrachten Schnellösekupplung 6. Eine derartige Schnellösekupplung 6 zählt bereits seit Jahren zum allgemein bekannten Stand der Technik und ist beispielsweise in der bereits zitierten Publikation "Voith Transmit®: Hochleistungsgelenkwellen - Ein Programm für die Praxis", Seite 32, Ausgabe 1/96, der Firma Voith Turbo GmbH ausführlich offenbart. In der Zwischenwelle 2 ist ein allseits bekannter Teleskop-Längenausgleich 7 angebracht, der die Zwischenwelle 2 in zwei unterschiedlich lange Teile 8, 9 unterteilt. Gemäß der Erfindung ist nun an jedem Teil 8, 9 mindestens ein Ausbauring 10 angebracht, der verschiedene, nachstehend beschriebene Außenkonturen 11 aufweisen kann. Wie in Figur 2 dargestellt, wird während des Walzenwechsels, d.h. die Gelenkwelle befindet sich im Stillstand, eine Zylinder-Kolben-Einheit 12 zwischen die mindestens zwei Ausbauringe 10 eingesetzt. Die Zylinder-Kolben-Einheit 12 ist in bevorzugterweise ein doppeltwirkender Hydraulikzylinder 12', der in bekannter Art und Weise angesteuert wird. Da die Steuerung zum Wissen eines Durchschnittsfachmanns gehört, wird von der Darstellung und Beschreibung derselben gänzlich abgesehen. Der eingesetzte doppeltwirkende Hydraulikzylinder 12' wird zu Beginn des nicht näher dargestellt Walzenwechsels eingefahren. Dadurch erfährt der Teleskop-Längenausgleich 7 eine Längenverkürzung und die Abtriebswelle 5 mit der Schnellösekupplung 6 wird von dem strichpunktiert dargestellten Walzenzapfen 13 der strichpunktiert dargestellten Walze 14 abgekoppelt. Die Walze 14 kann danach gegen eine neue Walze 14 ausgetauscht werden. Anschließend wird die Schnellösekupplung 6 der Abtriebswelle 5 an den Walzenzapfen 13 der neuen Walze 14 angesetzt und der eingesetzte doppeltwirkende Hydraulikzylinder 12' wird ausgefahren. Dadurch erfährt der Teleskop-Längenausgleich 7 eine Längenerweiterung und die Abtriebswelle 5 mit der Schnellösekupplung 6 wird von an Walzenzapfen 13 der neuen Walze 14 angekoppelt.

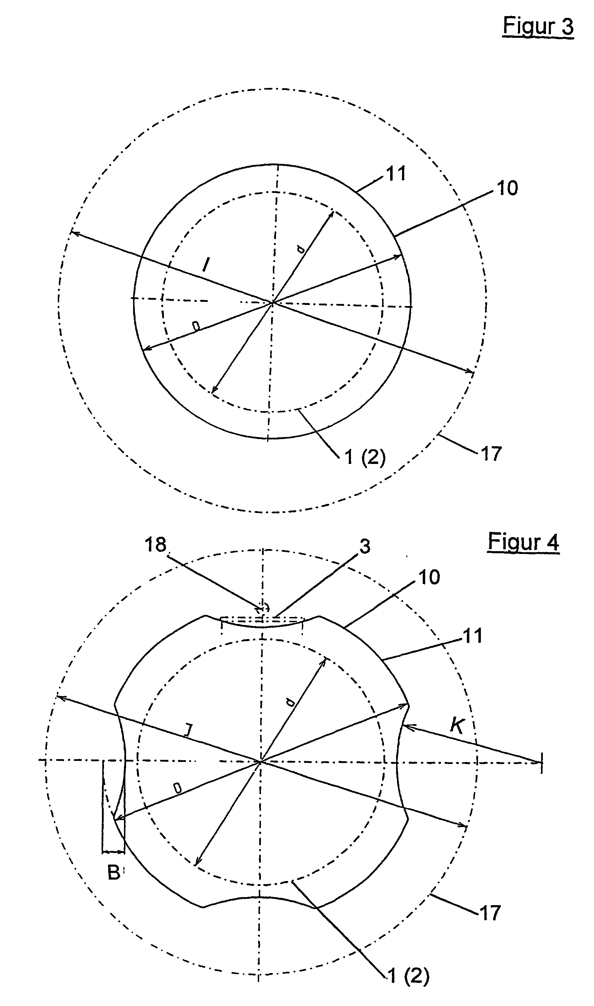

Die Figur 3 zeigt eine Frontansicht eines erfindungsgemäßen Ausbaurings 10 mit kreisrunder Außenkontur 11, wohingegen die Figur 4 eine Frontansicht eines erfindungsgemäßen Ausbaurings 10 mit größtenteils kreisrunden Außenkontur 11 und vier symmetrisch verteilten Aussparungen in Form eines Ellipsoids zeigt. Die strichpunktiert dargestellte Gelenkwelle 1 besitzt einen Außendurchmesser d, der Ausbauring 10 einen Durchmesser D und die strichpunktiert dargestellte Gelenkwellenschutzeinrichtung 17 einen Innendurchmesser 1. In Figur 4 ist ferner die Breite B und der Krümmungsradius K ersichtlich; zudem ist ein Schmierzapfen 18 des Kreuzgelenks 3 in vereinfachter Darstellung erkennbar.

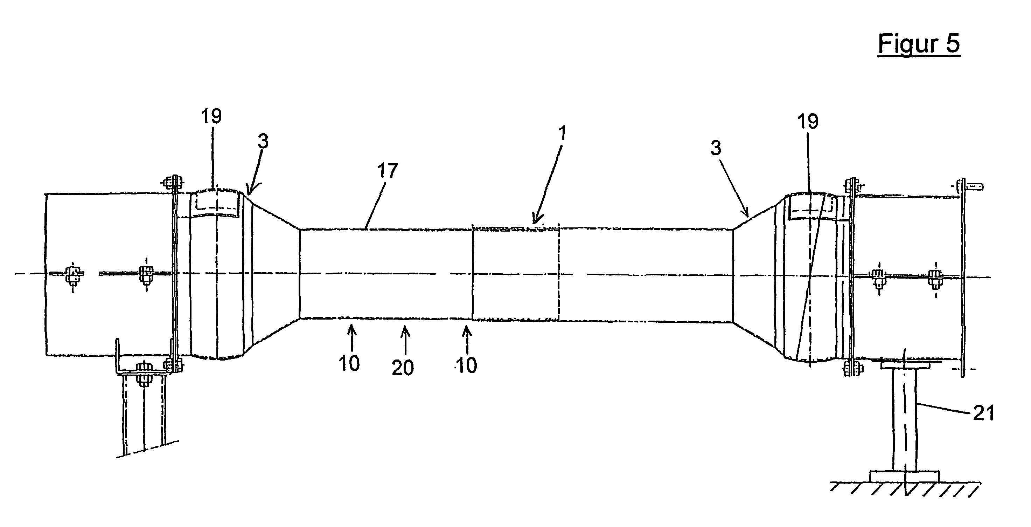

In Figur 5 ist eine vereinfachte Seitenansicht einer Gelenkwelle mit doppelten Kreuzgelenken 1 und mit einer Gelenkwellenschutzeinrichtung 17 dargestellt. Es ist deutlich zu erkennen, daß die Gelenkwellenschutzeinrichtung 17 im Bereich der Kreuzgelenke 3 mit mindestens je einer Schmieröffnung 19 versehen ist, die ein Entfernen der Gelenkwellenschutzeinrichtung 17 beim Schmieren der Kreuzgelenke 3 unnötig machen. Die in dem Bereich zwischen den Ausbauringen 10 angebrachte Wechselöffnung 20 ist nicht dargestellt. Jedoch ist die Abstützvorrichtung 21 erkennbar, die die nicht dargestellte Abtriebswelle samt ihrer dargestellten Gelenkwellenschutzeinrichtung 17 während des Walzenwechsels abstützt.

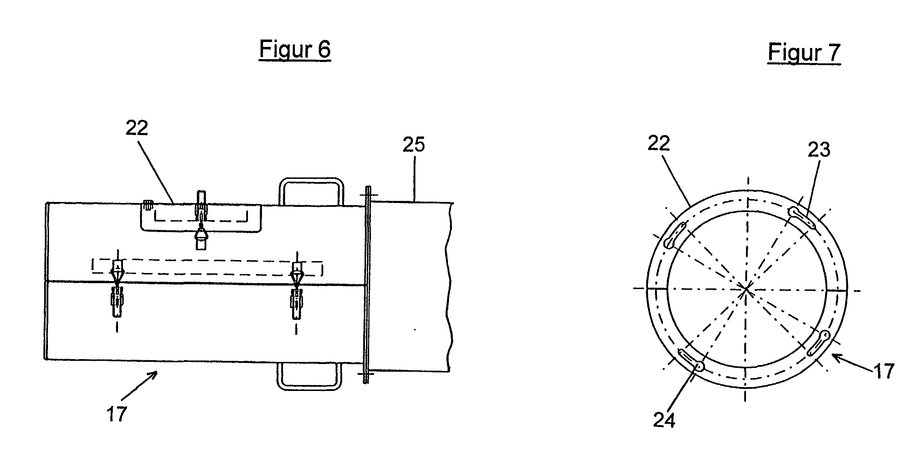

In den Figuren 6 und 7 ist nunmehr ein Anschlußstück 22 einer Gelenkwellenschutzeinrichtung 17 dargestellt. Die Figur 6 zeigt in einer Seitenansicht das Anschlußstück 22 in seiner bevorzugten Zweiteiligkeit samt angekoppelter Schutzvorrichtung 25 der nicht dargestellten Walze, wohingegen Figur 7 die Vorderansicht des Bajonettverschlusses 23 des Anschlußstücks 22 der Gelenkwellenschutzeinrichtung 17 zeigt. Es ist erkennbar, daß der Bajonettverschluß 23 mit vier symmetrisch verteilten Ösen 24 versehen ist, wobei jedoch auch jede andere Anzahl von Ösen, nicht Möglichkeit bei symmetrischer Verteilung, denkbar ist.

Zusammenfassend ist festzuhalten, daß durch die Erfindung eine Gelenkwelle der eingangs erwähnten Art so weitergebildet wird, daß die genannten Nachteile des Standes der Technik nicht auftreten und daß der Walzenwechsel mit einer Gelenkwelle leichter und rascher erfolgen kann.

### Bezugszeichenliste

- 1: Gelenkwelle mit doppeltem Kreuzgelenk
- 2: Zwischenwelle
- 3: Kreuzgelenk
- 4: Antriebswelle
- 5: Abtriebswelle
- 6: Schnellösekupplung
- 7: Teleskop-Längenausgleich
- 8, 9: Zwischenwellen-Teil
- 10: Koppelelement
- 11: Außenkontur
- 12: Hubelement
- 12': Doppeltwirkender Hydraulikzylinder
- 13: Walzenzapfen
- 14: Walze
- 17: Gelenkwellenschutzeinrichtung
- 18: Schmierzapfen
- 19: Schmieröffnung
- 20: Wechselöffnung
- 21: Abstützvorrichtung
- 22: Anschlußstück
- 23: Bajonettverschluß
- 24: Ösen
- 25: Schutzeinrichtung
- B: Breite
- I: Innendurchmesser
- d: Außendurchmesser
- D: Durchmesser
- K: Krümmungsradius

## Patentansprüche

1. Gelenkwelle (1), insbesondere für den Einsatz in einer Papier- oder Kartonmaschine,
mit zwei Kreuzgelenken (3), wobei jedes Kreuzgelenk (3) zu seiner Anschlußseite hin ein Wellenteil, Antriebswelle (4) bzw. Abtriebswelle (5), aufweist,
mit einer zwischen den Kreuzgelenken (3) liegenden, einen Teleskop-Längenausgleich (7) aufweisenden Zwischenwelle (2), die aus zwei Zwischenwellen-Teilen (8, 9) zusammengesetzt ist, und
mit einer an der Abtriebswelle (5) angebrachten Schnellösekupplung (6), insbesondere selbstzentrierende Schnellösekupplung, zwecks schnellem An- und Abkoppeln an eine bzw. von einer Walze (14),
**dadurch gekennzeichnet,**
**daß** jedes der über den Teleskop-Längenausgleich (7) miteinander verbundenen Zwischenwellen-Teile (8, 9) der Zwischenwelle (2) mit mindestens einem Koppelelement (10) versehen ist derart, daß im Stillstand der Gelenkwelle (1) die mindestens zwei Koppelelemente (10) mittels mindestens eines Hubelements (12) aneinander koppelbar sind.

2. Gelenkwelle (1) nach Schutzanspruch 1,
**dadurch gekennzeichnet, daß**
das Koppelelement (10) ein Ausbauring (10') ist.

3. Gelenkwelle (1) nach mindestens einem der vorangegangenen Schutzansprüche,
**dadurch gekennzeichnet, daß**
der Ausbauring (10'), in Längsrichtung der Zwischenwelle (2) gesehen, eine Dicke von 8 bis 20 mm aufweist.

4. Gelenkwelle (1) nach mindestens einem der vorangegangenen Schutzansprüche,
**dadurch gekennzeichnet, daß**
der Ausbauring (10') einen Durchmesser (D) im Bereich von 125 % bis 160 %, vorzugsweise von 135 % bis 150 %, des Außendurchmessers (d) der Zwischenwelle (2) aufweist.

5. Gelenkwelle (1) nach mindestens einem der vorangegangenen Schutzansprüche,
**dadurch gekennzeichnet, daß**
der Ausbauring (10'), in Längsrichtung der Zwischenwelle (2) gesehen, eine kreisrunde Außenkontur (11) aufweist.

6. Gelenkwelle (1) nach Schutzanspruch 5,
**dadurch gekennzeichnet, daß**
die komplette Gelenkwelle (1) von einer Gelenkwellenschutzeinrichtung (17) umgeben ist, die an ihrer Längsseite sowohl in dem Bereich zwischen den Ausbauringen (10') mindestens eine Wechselöffnung (20) als auch in den Bereichen der beiden Kreuzgelenke (3) mindestens je eine Schmieröffnung (19) aufweist.

7. Gelenkwelle (1) nach mindestens einem der Schutzansprüche 1 bis 4,
**dadurch gekennzeichnet, daß**
der Ausbauring (10'), in Längsrichtung der Zwischenwelle (2) gesehen, eine größtenteils kreisrunde Außenkontur (11) aufweist, die mit mindestens einer am Rand der Außenkontur (11) angebrachten Aussparung in Form eines Ellipsoids versehen ist.

8. Gelenkwelle (1) nach Schutzanspruch 7,
**dadurch gekennzeichnet, daß**
das Ellipsoid eine Breite (B) von 10 bis 50 mm, vorzugsweise von 20 bis 35 mm, und/oder einen Krümmungsradius (K) von 100 bis 200 mm, vorzugsweise von 125 bis 175 mm, aufweist.

9. Gelenkwelle (1) nach Schutzanspruch 7 oder 8,
**dadurch gekennzeichnet, daß**
die komplette Gelenkwelle (1) von einer Gelenkwellenschutzeinrichtung (17) umgeben ist, die an ihrer Längsseite in dem Bereich zwischen den Ausbauringen mindestens eine Wechselöffnung (20) aufweist.

10. Gelenkwelle (1) nach Schutzanspruch 6 oder 9,
**dadurch gekennzeichnet, daß**
die Gelenkwellenschutzeinrichtung (17) im Bereich zur Walze (14) mit einem Anschlußstück (22) versehen ist, das mit einem Bajonettverschluß (23) zur Schnellankoppelung und -abkoppelung mit einer bzw. von einer Schutzeinrichtung (25) der Walze (14) versehen ist.

11. Gelenkwelle (1) nach Schutzanspruch 10,
**dadurch gekennzeichnet, daß**
das Anschlußstück (22), in Längsrichtung der Zwischenwelle (2) gesehen, zweiteilig ausgeführt ist.

12. Gelenkwelle (1) nach mindestens einem der vorangegangenen Schutzansprüche,
**dadurch gekennzeichnet, daß**
die Abtriebswelle (5) während des Walzenwechsels durch eine Abstützvorrichtung (21) entgegen der wirkenden Schwerkraft abgestützt ist.

13. Gelenkwelle (1) nach mindestens einem der vorangegangenen Schutzansprüche,
**dadurch gekennzeichnet, daß**
das Hubelement (12) ein doppeltwirkender Hydraulikzylinder (12') ist.

14. Gelenkwelle (1) nach mindestens einem der vorangegangenen Schutzansprüche,
**dadurch gekennzeichnet, daß**
der Teleskop-Längenausgleich (7) eine Ausgleichsstrecke von 50 bis 250 mm, vorzugsweise von 100 bis 200 mm, besitzt.

## Claims

1. Articulated shaft (1), in particular for use in a paper or board machine,
having two universal joints (3), each universal joint (3) having on its connection side a shaft part, drive shaft (4) and output shaft (5),
having an intermediate shaft (2) which is located between the universal joints (3), has telescopic length compensating means (7) and is assembled from two intermediate shaft parts (8, 9), and
having a quick-release coupling (6), in particular a self-centring quick-release coupling, that is fitted to the output shaft (5) for the purpose of quick coupling to and detachment from a roll (14),
**characterized**
**in that** each of the intermediate parts (8, 9) of the intermediate shaft (2) that are connected to each other via the telescopic length compensating means (7) is provided with at least one coupling element (10), in such a way that, when the articulated shaft (1) is at a standstill, the at least two coupling elements (10) can be coupled to one other by means of at least one reciprocating element (12).

2. Articulated shaft (1) according to Claim 1, **characterized in that** the coupling element (10) is a dismantling ring (10').

3. Articulated shaft (1) according to at least one of the preceding claims, **characterized in that**, as viewed in the longitudinal direction of the intermediate shaft (2), the dismantling ring (10') has a thickness of 8 to 20 mm.

4. Articulated shaft (1) according to at least one of the preceding claims, **characterized in that** the dismantling ring (10') has a diameter (D) in the range from 125% to 160%, preferably from 135% to 150%, of the external diameter (d) of the intermediate shaft (2).

5. Articulated shaft (1) according to at least one of the preceding claims, **characterized in that**, as viewed in the longitudinal direction of the intermediate shaft (2), the dismantling ring (10') has a circular external contour (11).

6. Articulated shaft (1) according to Claim 5, **characterized in that** the complete articulated shaft (1) is surrounded by an articulated-shaft protective device (17) which has at least one changing opening (20) on its long side, in the region between the dismantling rings (10'), and also at least one lubrication opening (19) in each case in the regions of the two universal joints (3).

7. Articulated shaft (1) according to at least one of Claims 1 to 4, **characterized in that**, as viewed in the longitudinal direction of the intermediate shaft (2), the dismantling ring (10') has an external contour (11) which is for the most part circular and which is provided with at least one cutout in the form of an ellipsoid provided at the edge of the external contour (11).

8. Articulated shaft (1) according to Claim 7, **characterized in that** the ellipsoid has a width (B) of 10 to 50 mm, preferably of 20 to 35 mm, and/or a radius of curvature (K) of 100 to 200 mm, probably of 125 to 175 mm.

9. Articulated shaft (1) according to Claim 7 or 8, **characterized in that** the complete articulated shaft (1) is surrounded by an articulated-shaft protective device (17) which has at least one changing opening (20) on its long side, in the region between the dismantling rings.

10. Articulated shaft (1) according to Claim 6 or 9, **characterized in that**, in the region towards the roll (14), the articulated-shaft protective device (17) is provided with a connecting piece (22) which is provided with a bayonet fitting (23) for quick coupling to and uncoupling from a protective device (25) of the roll (14).

11. Articulated shaft (1) according to Claim 10, **characterized in that**, as viewed in the longitudinal direction of the intermediate shaft (2), the connecting piece (22) is divided into two.

12. Articulated shaft (1) according to at least one of the preceding claims, **characterized in that**, during the roll change, the output shaft (5) is supported counter to the force of gravity by a supporting device (21).

13. Articulated shaft (1) according to at least one of the preceding claims, **characterized in that** the reciprocating element (12) is a double-acting hydraulic cylinder (12').

14. Articulated shaft (1) according to at least one of the preceding claims, **characterized in that** the telescopic length compensating means (7) has a compensating travel of 50 to 250 mm, preferably of 100 to 200 mm.

## Revendications

1. Arbre articulé (1), en particulier pour l'utilisation dans une machine à papier ou à carton,
avec deux joints universels (3), chaque joint universel (3) présentant, vers son côté de raccordement, une partie d'arbre, un arbre d'entraînement (4) ou un arbre de sortie (5),
avec un arbre intermédiaire (2) se trouvant entre les joints universels (3), présentant une compensation de longueur télescopique (7), qui est constitué de deux parties d'arbre intermédiaire (8, 9), et
avec un accouplement à libération rapide (6) monté sur l'arbre de sortie (5), notamment un accouplement à libération rapide auto-centrant, afin de réaliser un accouplement et un désaccouplement rapides à ou d'un rouleau (14),
**caractérisé en ce que**
chacune des parties d'arbre intermédiaire (8, 9) de l'arbre intermédiaire (2), reliée l'une à l'autre par le biais de la compensation de longueur télescopique (7), est pourvue d'au moins un élément d'accouplement (10) de telle sorte qu'à l'arrêt de l'arbre articulé (1), les au moins deux éléments d'accouplement (10) puissent être accouplés l'un à l'autre au moyen d'au moins un élément de levage (12).

2. Arbre articulé (1) selon la revendication 1,
**caractérisé en ce que**
l'élément d'accouplement (10) est une bague de démontage (10').

3. Arbre articulé (1) selon au moins l'une quelconque des revendications précédentes,
**caractérisé en ce que**
la bague de démontage (10'), vue dans la direction longitudinale de l'arbre intermédiaire (2), présente une épaisseur de 8 à 20 mm.

4. Arbre articulé (1) selon au moins l'une quelconque des revendications précédentes,
**caractérisé en ce que**
la bague de démontage (10') présente un diamètre (D) dans la plage de 125% à 160%, de préférence de 135% à 150%, du diamètre extérieur (d) de l'arbre intermédiaire (2).

5. Arbre articulé (1) selon au moins l'une quelconque des revendications précédentes,
**caractérisé en ce que**
la bague de démontage (10'), vue dans la direction longitudinale de l'arbre intermédiaire (2), présente un contour extérieur circulaire (11).

6. Arbre articulé (1) selon la revendication 5,
**caractérisé en ce que**
l'arbre articulé complet (1) est entouré par un dispositif de protection d'arbre articulé (17) qui présente sur son côté longitudinal ainsi que dans la région entre les bagues de démontage (10'), au moins une ouverture de remplacement (20) ainsi que dans les régions des deux joints universels (3), au moins une ouverture respective de lubrification (19).

7. Arbre articulé (1) selon au moins l'une quelconque des revendications 1 à 4,
**caractérisé en ce que**
la bague de démontage (10'), vue dans la direction longitudinale de l'arbre intermédiaire (2), présente un contour extérieur (11) circulaire sur sa majeure partie, qui est pourvu d'au moins un évidement en forme d'ellipsoïde prévu sur le bord du contour extérieur (11).

8. Arbre articulé (1) selon la revendication 7,
**caractérisé en ce que**
l'ellipsoïde présente une largeur (B) de 10 à 50 mm, de préférence de 20 à 35 mm et/ou un rayon de courbure (K) de 100 à 200 mm, de préférence de 125 à 175 mm.

9. Arbre articulé (1) selon la revendication 7 ou 8,
**caractérisé en ce que**
l'arbre articulé complet (10 est entouré par un dispositif de protection d'arbre articulé (17) qui présente sur son côté longitudinal au moins une ouverture de remplacement (20) dans la région entre les bagues de démontage.

10. Arbre articulé (1) selon la revendication 6 ou 9,
**caractérisé en ce que**
le dispositif de protection d'arbre articulé (17) est pourvu dans la région allant vers le rouleau (14) d'une pièce de raccordement (22) qui est pourvue d'une fermeture par emboîtement à baïonnette (23) pour l'accouplement et le désaccouplement rapides à ou d'un dispositif de protection (25) du rouleau (14).

11. Arbre articulé (1) selon la revendication 10,
**caractérisé en ce que**
la pièce de raccordement (22), vue dans la direction longitudinale de l'arbre intermédiaire (2), est réalisée en deux parties.

12. Arbre articulé (1) selon au moins l'une quelconque des revendications précédentes,
**caractérisé en ce que**
l'arbre de sortie (5) est supporté par un dispositif de support (21) à l'encontre de la force de pesanteur agissant pendant le remplacement de rouleau.

13. Arbre articulé (1) selon au moins l'une quelconque des revendications précédentes,
**caractérisé en ce que**
l'élément de levage (12) est un vérin hydraulique à double action (12').

14. Arbre articulé (1) selon au moins l'une quelconque des revendications précédentes,
**caractérisé en ce que**
la compensation de longueur télescopique (7) possède une distance de compensation de 50 à 250 mm, de préférence de 100 à 200 mm.
